## Europäisches Patentamt

## European Patent Office

## Office européen des brevets

(19)

(11) Veröffentlichungsnummer : **0 063 176**
**B1**

(12) **EUROPÄISCHE PATENTSCHRIFT**

(45) Veröffentlichungstag der Patentschrift :
05.06.85

(21) Anmeldenummer : **81109046.3**

(22) Anmeldetag : **27.10.81**

(51) Int. Cl.⁴ : **H 02 M 7/529**

(54) Steuersatz für einen Wechselrichter.

(30) Priorität : **16.04.81 DE 3115612**

(43) Veröffentlichungstag der Anmeldung :
**27.10.82 Patentblatt 82/43**

(45) Bekanntmachung des Hinweises auf die Patenterteilung : **05.06.85 Patentblatt 85/23**

(84) Benannte Vertragsstaaten :
**AT BE CH DE FR GB IT LI NL SE**

(56) Entgegenhaltungen :
**FR-A- 2 229 164**
**GB-A- 2 025 175**

(73) Patentinhaber : **Siemens Aktiengesellschaft Berlin und München Wittelsbacherplatz 2 D-8000 München 2 (DE)**

(72) Erfinder : **Claussen, Ulf, Dr. Dipl.-Ing. Wacholderstrasse 9 D-2000 Wedel (DE)**

## Beschreibung

Die Erfindung betrifft einen Steuersatz für einen Wechselrichter mit einem digitalen Ansteuerspeicher, der in Abhängigkeit von einer vorgegebenen Amplitude der Wechselrichter-Ausgangsspannung Ansteuertabellen für die Wechselrichterventile enthält, wobei jede Ansteuertabelle für jede Ansteuerkombination eine Spalte aufweist, die diese Ansteuerkombination selbst sowie eine Zeitinformation enthält, und wobei ein Oszillator variabler Frequenz mit dem Zähleingang eines Zählers verbunden ist, der die periodische Abfrage des Speichers steuert.

Ein derartiger Steuersatz ist aus der DE-AS 23 23 826 bekannt.

Dabei wird eine Schwingungsperiode der Wechselrichter-Ausgangsspannung im M gleiche Winkelschritte unterteilt, die fortlaufend numeriert sind, wobei der Zählerstand mit der Nummer des jeweiligen Winkelschritts übereinstimmt. Der Ansteuerspeicher enthält die Nummern der Winkelschritte, bei denen ein Wechselrichterventile gezündet bzw. gelöscht werden soll, fest eingespeichert. Dem Ansteuerspeicher ist ein Adressenzähler vorgeschaltet, wobei die vom Adressenzähler adressierte Speicherzelle an den Speicherausgang gegeben wird. Die Ausgänge des Zählers und des Ansteuerspeichers sind einem Vergleicher zugeführt, der bei Übereinstimmung der anstehenden Signale einen Befehl an die Ventile weitergibt. Bei Abgabe eines Befehls wird gleichzeitig der Adressenzähler weitergeschaltet. Für unterschiedliche Amplituden der Wechselrichter-Ausgangsspannung enthält der Ansteuerspeicher verschiedene Ansteuertabellen. Die Frequenz der Wechselrichter-Ausgangsspannung wird dabei mit der Oszillatorfrequenz vorgegeben, da nämlich in Abhängigkeit von der Oszillatorfrequenz der vorgegebene Ablauf der Ansteuerung unterschiedlich schnell durchlaufen wird.

Bei diesem Steuersatz können vorher berechnete Zusammenhänge zwischen Eingangsgröße, z. B. Spannungsamplitude und Ausgangsgröße, z. B. Zündwinkel vorher berechnet und in Form einer Liste im Ansteuerspeicher abgespeichert werden. Damit kann die Ansteuerung auch mit aufwendigen Optimierungsverfahren extern ermittelt werden. Nachteilig bei dem bekannten Steuersatz ist jedoch, daß die Unterteilung in Winkelschritte sowie der Ansteuerablauf selbst fest im Ansteuerspeicher abgespeichert ist und daher nicht verändert werden können. Das mit den Winkelschritten vorgegebene Raster kann mit Rücksicht auf die zulässige Schalthäufigkeit der Wechselrichterventile bei hohen Frequenzen nicht beliebig fein gewählt werden. Andererseits wird dieses Raster jedoch bei niedrigen Frequenzen zu grob, so daß eine schlechte Annäherung z. B. an die Sinusform erreicht wird. Bei höheren Frequenzen ist es z. B. beim Motorbetrieb erwünscht, von der Sinusform der Wechselrichter-Ausgangsspannung auf eine Rechteckform überzugehen. Auch dies ist mit der bekannten Anordnung wegen der festen Abspeicherung der Ansteuertabellen nicht möglich.

Aufgabe der Erfindung ist es daher, einen Steuersatz der eingangs genannten Art so auszugestalten, daß die Schalthäufigkeit innerhalb einer Periode sowie die Kurvenform der Wechselrichter-Ausgangsspannung variabel sind.

Diese Aufgabe wird erfindungsgemäß dadurch gelöst, daß der Ansteuerspeicher von einem Mikroprozessor in Abhängigkeit von einem vorgegebenen Frequenzbereich sowie von einer vorgegebenen Amplitude der Wechselrichter-Ausgangsspannung mit unterschiedlichen Ansteuertabellen geladen wird, daß der Oszillator variabler Frequenz aus einem Taktgenerator und einem nachgeschalteten Frequenzteiler besteht, dessen Teilungsfaktor durch den Frequenzsollwert der Wechselrichter-Ausgangsspannung auf einen zum Frequenzsollwert umgekehrt proportionalen Wert gesteuert wird und dessen Ausgang mit dem Zähleingang eines Zählers verbunden ist, daß der Voreinstelleingang des Zählers mit den die Zeitinformation enthaltenden Speicherplätzen des Ansteuerspeichers verbunden ist, wobei die Zeitinformation die Anzahl der Takte am Ausgang des Frequenzteilers beinhaltet, für die die zugeordnete Ansteuerkombination anstehen soll und daß der Ausgang des Zählers mit einer Steuerung für den Ansteuerspeicher verbunden ist, die die nächste Spalte der Ansteuertabelle auf die Speicherausgänge weiterschaltet.

Dabei wird also der Ansteuerspeicher für verschiedene Bereiche von Ausgangsfrequenzen mit unterschiedlichen Ansteuertabellen geladen, so daß für jeden Frequenzbereich eine geeignete Schalthäufigkeit und Kurvenform der Wechselrichter-Ausgangsspannung gewählt werden kann. Da der Ansteuerspeicher nur eine Ansteuertabelle enthält, ist sein Speicherplatzbedarf verhältnismäßig gering. Der weitaus größte Teil der erforderlichen Daten kann in einem dem Mikroprozessor zugeordneten Speicher abgespeichert werden, wobei jedoch der gesamte Speicherplatzbedarf verringert werden kann, da der Mikroprozessor selbst eine « intelligente » Auswertung dieses Speichers durchführen kann. Damit können beispielsweise Symmetrien oder Proportionalitäten der Ansteuerverläufe für verschiedene Frequenzen bzw. Amplituden der Wechselrichter-Ausgangsspannung zur Verringerung der abgespeicherten Daten benutzt werden.

Vorteilhafterweise kann der Ansteuerspeicher ein Zwischenspeicher mit « first in-first out » Struktur sein, der mindestens eine der Anzahl der Phasen des Wechselrichters entsprechende Anzahl von Spalten einer Ansteuertabelle aufnimmt, wobei die restlichen Spalten dieser Ansteuertabelle und die anderen Ansteuertabellen in einem Speicher des Mikroprozessors abgelegt sind, wobei der Zwischenspeicher ein Signal an den Mikroprozessor abgibt, wenn nicht alle Speicherplätze des Zwischenspeichers besetzt sind und wobei der Mikroprozessor bei Auftreten dieses Signals den Zwischenspeicher mit der nächstfolgenden Spalte der Ansteuertabelle lädt. Bei einem Wechselrichter ist die Änderung des Schaltzustands innerhalb einer Phase durch die maximal zulässige Schaltfrequenz der Wechselrichterventile begrenzt. Die Verarbeitungsgeschwindigkeit handelüblicher Mikroprozessoren reicht für diesen Fall ohne weiteres aus. Schaltvorgänge in verschiedenen Phasen des Wechselrichters können jedoch beliebig schnell aufeinanderfolgen, so daß eine maximal der Anzahl der Phasen entsprechende Anzahl von schnellen Änderungen aufeinanderfolgen kann. Diese schnellen Änderungen können aus dem Ansteuerspeicher, dessen Zugriffszeit sehr kurz gemacht werden kann, abgerufen werden, während dem Mikroprozessor anschließend genügend Zeit bleibt, den Ansteuerspeicher wieder zu laden. Die Geschwindigkeit von Signaländerungen ist daher nicht durch die Verarbeitungsgeschwindigkeit des Mikroprozessors begrenzt.

Zweckmäßigerweise kann für den Bereich niedriger Frequenzsollwerte der Wechselrichter-Ausgangsspannung der Teilerfaktor des Teilers verkleinert und die Wertezahl der Ansteuertabelle erhöht sein. Damit wird die Ansteuertabelle mit einer höheren Frequenz abgefragt, so daß die für die Ansteuerung des Wechselrichters erforderlichen Werte in einem feineren Raster liegen. Damit wird bei niedrigen Frequenzen eine Verschlechterung der Abtastgenauigkeit aufgrund der zeitlichen Dehnung des Impulsrasters verhindert.

Der erfindungsgemäße Steuersatz wird nachfolgend anhand eines Ausführungsbeispiels näher erläutert.

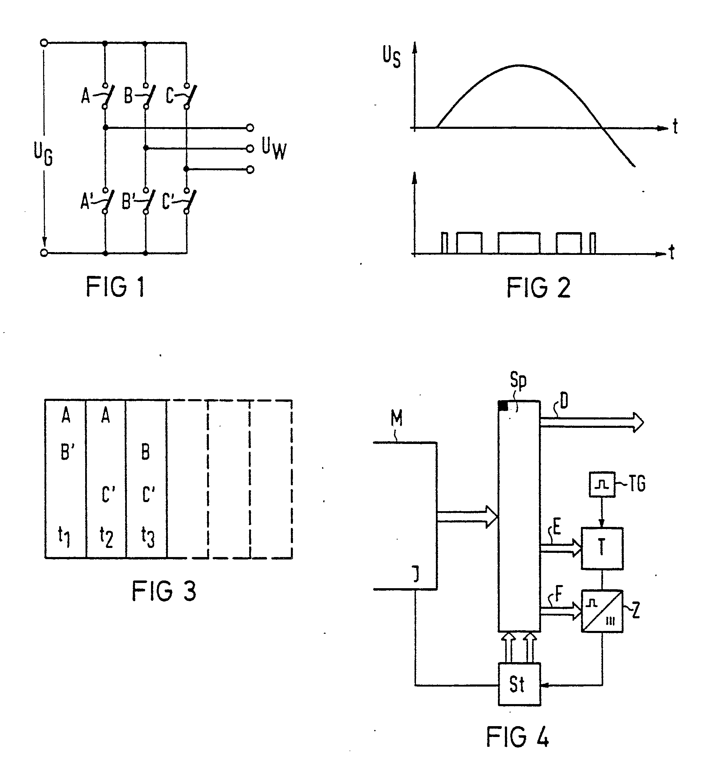

In den Figuren 1 und 2 ist zur Erläuterung der Problemstellung zunächst das bekannte Grundprinzip für dir Ansteuerung eines Wechselrichters dargestellt. Ein Wechselrichter besteht beispielsweise aus sechs Ventilen, z. B. Thyristoren oder Transistoren A bis C und A' bis C' in einer Dreiphasen-Brückenschaltung und wandelt die am Eingang anstehende Gleichspannung $U_G$ in eine dreiphasige Wechselspannung $U_W$ um. Um eine möglichst weitgehende Annäherung der Wechselspannung $U_W$ an die Sinusform zu erreichen, werden die Ventile A bis C und A' bis C' pulsbreitenmoduliert angesteuert. Dies bedeutet, daß bei niedrigen Momentanwerten einer sinusförmigen Sollspannung $U_S$ den entsprechenden Schaltern schmale Impulse und bei höheren Momentanwerten breitere Impulse zugeführt werden. Es ergibt sich dann eine Spannung, die sich umsomehr an eine Sinusform annähert, je feiner die Ansteuerimpulse unterteilt sind. Wie bereits in der Beschreibungseinleitung erwähnt, kann man die benötigten Ansteuerimpulse in digitaler Form vorgeben und die entsprechenden Werte in Tabellenform in einem Speicher ablegen. Eine derartige Tabelle muß Informationen über jeden Schaltzustand während einer Periode der Wechselspannung $U_W$ sowie eine Zeitinformation enthalten. Sie ist in Spalten unterteilt, wobei jede Spalte eine Binärsignalkombination enthält, die den Schaltzustand der Schalter A bis C bzw. A' bis C' angibt. Außerdem enthält beim erfindungsgemäßen Steuersatz jede Spalte als Zeitinformation die Anzahl $t_1$-$t_3$ der Takte, für die die betreffende Ansteuerkombination anstehen soll. Die Anzahl derartiger Spalten je Tabelle gibt das Raster vor, in dem eine Umschaltung möglich ist und entscheidet somit über die mögliche Annäherung an eine vorgegebene Kurvenform, z. B. Sinusform.

Da die Ansteuerimpulsfolge für die Schalter A bis C bzw. A' bis C' des Wechselrichters sowohl von der Frequenz als auch vom Betrag der Ausgangsspannung $U_W$ des Wechselrichters abhängig ist, wäre an sich für jede Frequenz und jede Spannung eine gesonderte Tabelle erforderlich. Damit wäre der Speicherplatzbedarf jedoch sehr groß. Durch Veränderung der Abfragegeschwindigkeit der Ansteuertabelle in Abhängigkeit vom Frequenzsollwert der Wechselrichter-Ausgangsspannung ist es jedoch möglich, für einen Frequenzbereich der Wechselrichter-Ausgangsspannung nur eine Ansteuertabelle vorzusehen.

Fig. 4 zeigt ein Ausführungsbeispiel des erfindungsgemäßen Steuersatzes. Dabei ist ein Speicher Sp vorgesehen, an dessen Ausgang D die zur Ansteuerung des Schalter des Wechselrichters erforderlichen Binärsignalkombinationen anstehen, an dessen Ausgang E ein noch zu erläuternder Teilungsfaktor und an dessen Ausgang F die Zahl der Taktimpulse t ansteht, für die die betreffende Ansteuersignalkombination konstant bleiben soll. Mit dem am Ausgang E anstehenden Teilerfaktor wird ein Frequenzteiler T gesteuert, an dessen Eingang die von einem Taktgeber TG erzeugte Taktspannung ansteht. Die Taktfrequenz wird, durch den Frequenzteiler T geteilt, dem Zähleingang eines Rückwärtszählers Z zugeführt. Der Voreinstelleingang des Rückwärtszählers Z ist mit dem Ausgang F des Speichers Sp verbunden. Sobald der Zähler Z den Zählerstand Null erreicht hat, gibt er über seinen Ausgang ein Signal an die Steuereinheit St des Speichers Sp. ab. Der Speicher Sp wird von einem Mikroprozessor geladen. Die Steuereinheit St des Speichers Sp ist mit dem Interrupteingang I des Mikroprozessors M verbunden.

Der vom Mikroprozessor M geladene Speicher Sp enthält z. B. für einen dreiphasigen Wechselrichter drei Spalten der Tabelle nach Fig. 3. Außerdem enthält er einen Teilerfaktor, der dem gewünschten Sollwert der Wechselrichter-Ausgangsfrequenz umgekehrt proportional ist. Durch die Ausgangsimpulse des Frequenzteilers T wird der zunächst auf die Taktimpulszahl t gesetzte Zählerstand des Zählers Z dekrementiert. Sobald der Zählerstand den Wert Null erreicht hat, gibt der Zähler Z einen Befehl an die Steuereinheit St, die nächstfolgende Spalte der Ansteuertabelle an die Ausgänge des Speichers Sp zu schieben. Die Steuereinheit St meldet dann über den Interrupteingang an den Mikroprozessor, daß der Speicher Sp nicht mehr vollständig geladen ist. Damit wird im Mikroprozessor M ein Unterprogramm ausgelöst, das den Speicher Sp mit einer neuen Spalte der Tabelle füllt. Da der Speicher Sp eine « first in-first out »-Struktur aufweist, werden somit nacheinander alle Spalten der Ansteuertabelle auf die Ausgänge D bis F des Speichers Sp geschaltet.

Wie bereits erläutert, wird durch den Frequenzteiler T die Taktfrequenz durch einen zur Ausgangsfrequenz des Wechselrichters umgekehrt proportionalen Wert geteilt. Die Frequenz der am Zählereingang anstehenden Impulsfolge wird daher umso höher, je höher der Sollwert für die Wechselrichter-Ausgangsfrequenz wird. Dies bedeutet, daß die vom Mikroprozessor M gelieferte Tabelle mit dem Sollwert der Wechselrichter-Ausgangsfrequenz abgearbeitet wird. Somit ist für einen Frequenzbereich nur eine Ansteuertabelle erforderlich. Unterschiedliche Tabellen für verschiedene Frequenzbereiche sind dann erforderlich, wenn in einem Frequenzbereich eine Ansteuerimpulsfolge vorgegeben werden soll, die nicht mehr rein durch Zeitdehnung des Impulsrasters eines anderen Frequenzbereichs gewonnen werden kann. Bei Antrieben ist es im Bereich hoher Drehzahlen und damit hoher Aussteuerung des Wechselrichters zweckmäßig, von der Sinusform der Ausgangsspanung abzugehen und eine annähernd rechteckförmige Ausgangsspannung zu bilden. Dies wird durch eine gesonderte Ansteuertabelle für den Bereich hoher Frequenzen der Wechselrichter-Ausgangsspannung erreicht.

Bei sehr niedrigen Ausgangsfrequenzen des Wechselrichters kann das für höhere Frequenzen ausreichende Zeitraster der Ansteuersignalkombination wegen der Zeitdehnung zu grob werden. In diesem Fall wird der Proportionalitätsfaktor zwischen Sollwert der Wechselrichter-Ausgangsfrequenz und Teilungsfaktor so geändert, daß z. B. die Zählimpulsfrequenz verdoppelt wird. Entsprechend muß auch die für den betreffenden Frequenzbereich bestimmte Ansteuertabelle doppelt so viele Spalten aufweisen, so daß wieder ein genügend feines Raster der Ansteuerkombination auch bei niedrigen Ausgangsfrequenzen zur Verfügung steht. Durch das Laden des Ansteuerspeichers mit einem Mikroprozessor ist der Übergang auf verschiedene Ansteuertabellen in Abhängigkeit vom Frequenzbereich der Ausgangsspannung ohne weiteres möglich.

Der Mikroprozessor M muß beim beschriebenen Steuersatz lediglich nach einem Interruptsignal für die Dauer des den Speichers Sp ladenden Unterprogramms zur Verfügung stehen. Der Mikroprozessor kann dann die unterbrochene ursprüngliche Aufgabe wieder fortsetzen, bis durch den Nulldurchgang des Zählers über die Steuereinheit St wieder ein Interruptsignal ausgelöst wird.

Durch das Zwischenspeichern mehrerer Spalten der Ansteuertabelle im Speicher Sp außerhalb des Mikroprozessors können die Werte aus dem Speicher Sp sehr schnell abgerufen werden. Die Verarbeitungsgeschwindigkeit des Mikroprozessors kann verhältnismäßig gering sein. Diese Verarbeitungsgeschwindigkeit muß zwar an die mittlere Häufigkeit der Änderung der binären Ausgangsinformation, die ohnehin durch die Zulässige Schalthäufigkeit einzelner Ventile des Wechselrichters begrenzt ist, angepaßt werden. Änderungen, die verschiedene Phasen des Wechselrichters betreffen, können jedoch beliebig schnell aufeinanderfolgen. Dieser schnellen Anforderung wird der Speicher Sp gerecht, während der Mikroprozessor genügend Zeit zur Verfügung hat, die im Speicher Sp fehlenden Werte wieder aufzufüllen. Bei einem dreiphasigen Wechselrichter sind im Speicher Sp z. B. drei Spalten der Ansteuertabelle abgespeichert, da maximal drei Änderungen kurz aufeinanderfolgen können.

## Patentansprüche

1. Steuersatz für einen Wechselrichter mit einem digitalen Ansteuerspeicher (Sp), der in Abhängigkeit von einer vorgegebenen Amplitude der Wechselrichter-Ausgangsspannung ($U_W$) Ansteuertabellen (Fig. 3) für die Wechselrichterventile (A, B, C, A′, B′, C′) enthält, wobei jede Ansteuertabelle für jede Ansteuerkombination eine Spalte aufweist, die diese Ansteuerkombination selbst sowie eine Zeitinformation ($t_1$, $t_2$, $t_3$) enthält, und wobei ein Oszillator variabler Frequenz mit dem Zähleingang eines Zählers (Z) verbunden ist, der die periodische Abfrage des Speichers (Sp) steuert, dadurch gekennzeichnet, daß der Ansteuerspeicher (SP) von einem Mikroprozessor (M) in Abhängigkeit von einem vorgegebenen Frequenzbereich sowie von einer vorgegebenen Amplitude der Wechselrichter-Ausgangsspannung ($U_W$) mit unterschiedlichen Ansteuertabellen geladen wird, daß der Oszillator variabler Frequenz aus einem Taktgeber (TG) und einem nachgeschalteten Frequenzteiler (T) besteht, dessen Teilungsfaktor durch den Frequenzsollwert der Wechselrichter-Ausgangsspannung ($U_W$) auf einen zum Frequenzsollwert umgekehrt proportionalen Wert gesteuert wird und dessen Ausgang mit dem Zähleingang eines Zählers (Z) verbunden ist, daß der Voreinstelleingang des Zählers (Z) mit den die Zeitinformation enthaltenden Speicherplätzen des Ansteuerspeichers (Sp) verbunden ist, wobei die Zeitinformation die Anzahl der Takte am Ausgang des Frequenzteilers (T) beinhaltet, für die die zugeordnete Ansteuerkombination anstehen soll und daß der Ausgang des Zählers (Z) mit einer Steuerung für den Ansteuerspeicher (Sp) verbunden ist, die die nächste Spalte der Ansteuertabelle auf die Speicherausgänge weiterschaltet.

2. Steuersatz nach Anspruch 1, dadurch gekennzeichnet, daß der Ansteuerspeicher (Sp) ein Zwischenspeicher mit « first in-first out »-Struktur ist, der mindestens eine der Anzahl der Phasen des Wechselrichters entsprechende Anzahl von Spalten einer Ansteuertabelle aufnimmt, wobei die restlichen Spalten dieser Ansteuertabelle sowie die anderen Ansteuertabellen in einem Speicher des Mikroprozessors (M) abgelegt sind, daß der Zwischenspeicher (Sp) ein Signal an den Mikroprozessor (M) abgibt, wenn nicht alle Speicherplätze des Zwischenspeichers (Sp) besetzt sind und daß der Mikroprozessor (M) bei Auftreten dieses Signals den Zwischenspeicher (SP) mit der nächstfolgenden Spalte der Ansteuertabelle lädt.

3. Steuersatz nach Anspruch 1 oder 2, dadurch gekennzeichnet, daß für den Bereich niedriger Frequenzsollwerte der Wechselrichter-Ausgangs-spannung ($U_W$) der Teilerfaktor des Teilers (T) verkleinert und die Wertezahl der Ansteuertabelle erhöht ist.

**Claims**

1. A control device for an inverter having a digital control store (Sp), which in dependence upon a predetermined amplitude of the inverter output voltage ($U_W$) contains control tables (Fig. 3) for the inverter valves (A, B, C, A′, B′, C′), wherein each control table for each control combination has a column which contains the control combination itself and an item of time information ($t_1$, $t_2$, $t_3$) and wherein an oscillator of variable frequency is connected to the counting input of a counter (Z) which controls the periodical interrogation of the store (Sp), characterised in that the control store (Sp) is loaded with different control tables by a microprocessor (M) in dependence upon a predetermined frequency range and a predetermined amplitude of the inverter output voltage ($U_W$), that the oscillator of variable frequency consists of a pulse generator (TG) and a subsequent frequency divider (T) whose division factor is controlled to a value inversely proportional to the theoretical frequency value by the theoretical frequency value of the inverter output voltage ($U_W$), and whose output is connected to the counting input of a counter (Z), that the presetting input of the counter (Z) is connected to the storage places of the control store (Sp) which contain the time information, where the time information comprises the number of pulses at the output of the frequency divider (T) for which the assigned control combination is to be present, and that the output of the counter (Z) is connected to a control unit for the control store (Sp), which control unit switches the column of the control table onto the storage outputs.

2. A control device as claimed in Claim 1, characterised in that the control store (Sp) is an intermediate store with a « first in-first out » structure, which stores at loast a number of celumns of a control table which corresponds to the number of the phases of the inverter, where the remainíng columns of the control table and the other control tables are stored in a store of the microprocessor (M), that the intermediate store (Sp) transmits a signal to the microprocessor (M) if all of the storage places of the intermediate store (Sp) are not occupied, and that on occurrence of this signal the microprocessor (M) loads the intermediate store (Sp) with the next column of the control table.

3. A control device as claimed in Claim 1 or 2, characterised in that the divider factor of the divider (T) is reduced and the coefficient of the control table is increased for the range of low theoretical frequency values of the inverter output voltage ($U_W$).

**Revendications**

1. Dispositif de commande pour un onduleur, comportant une mémoire de commande numérique (Sp), qui contient des tableaux de commande (figure 3) pour les valves (A, B, C, A′, B′, C′) de l'onduleur en fonction d'une amplitude prédéterminée de la tension de sortie ($U_W$) de ce dernier, chaque tableau de commande comportant pour chaque combinaison de commande une colonne qui contient cette combinaison de commande elle-même ainsi qu'une information de temps ($t_1$, $t_2$, $t_3$), et dans lequel un oscillateur à fréquence variable est relié à l'entrée de comptage d'un compteur (Z) qui commande l'interrogation périodique de la mémoire (Sp), caractérisé par le fait que la mémoire de commande (Sp) est chargée par un microprocesseur (M) avec différents tableaux de commande en fonction d'une plage prédéterminée de fréquences et en fonction d'une amplitude prédéterminée de la tension de sortie ($U_W$) de l'onduleur, que l'oscillateur à fréquence variable est constitué par un générateur de cadence (TG) et par un diviseur de fréquence (T) branché en aval et dont le facteur de division est réglé, par la valeur de consigne de la fréquence de la tension de sortie ($U_W$) de l'onduleur, à une valeur inversement proportionnelle à la valeur de consigne de la fréquence et dont la sortie est reliée à l'entrée de comptage d'un compteur (Z), que l'entrée de préréglage du compteur (Z) est reliée aux cases de la mémoire de commande (Sp) contenant l'information temporelle, qui inclut le nombre des impulsions de cadence présent à la sortie du diviseur de fréquence (T) et pour lequel la combinaison de commande associée doit être présente, et que la sortie du compteur (Z) est reliée à un dispositif de commande de la mémoire de commande (Sp), qui transmet la colonne immédiatement suivante du tableau de commande aux sorties de la mémoire.

2. Dispositif de commande suivant la revendication 1, caractérisé par le fait que la mémoire de commande (Sp) est une mémoire intermédiaire possédant une structure « premier entré-premier sorti », qui reçoit au moins un nombre de colonnes d'un tableau de commande, qui correspond au nombre des phases de l'onduleur, les autres colonnes de ce tableau de commande ainsi que les autres tableaux de commande étant mémorisés dans une mémoire du microprocesseur (M), que la mémoire intermédiaire (Sp) envoie un signal au microprocesseur (M) lorsque toutes ses cases ne sont pas occupées et que, lors de l'apparition de ce signal, le microprocesseur (M) charge la mémoire intermédiaire (Sp) avec la colonne immédiatement suivante du tableau de commande.

3. Dispositif de commande suivant la revendication 1 ou 2, caractérisé par le fait que pour la plage des faibles valeurs de consigne de la fréquence de la tension de sortie ($U_w$) de l'onduleur, le facteur de division du diviseur (T) est réduit et le nombre des valeurs du tableau de commande est accru.

FIG 1

$U_G$

$U_W$

A  B  C

A'  B'  C'

FIG 2

$U_S$

t

t

| A B' | A C' | B C' | | | |
|------|------|------|---|---|---|
| $t_1$ | $t_2$ | $t_3$ | | | |

FIG 3

FIG 4

M

Sp

D

TG

E

T

J

F

Z

III

St